# EUROPÄISCHE PATENTSCHRIFT

(11) **EP 1 724 494 B1**
(45) Veröffentlichungstag und Bekanntmachung des Hinweises auf die Patenterteilung: **25.02.2009**
(21) Anmeldenummer: 06009805.0
(22) Anmeldetag: 12.05.2006
(51) Int. Cl.: F16G 5/18

(54) **Laschenkette für ein Kegelscheiben-Umschlingungsgetriebe**
Plate-link chain for a conical pulleys transmission
Chaine à plaquettes pour une transmission à poulies coniques

(30) Priorität: 18.05.2005 DE 102005022758
(43) Veröffentlichungstag der Anmeldung: 22.11.2006
(73) Patentinhaber: AUDI AKTIENGESELLSCHAFT, 85045 Ingolstadt (DE)
(72) Erfinder: Krause, Matthias, 85114 Buxheim (DE)
(74) Vertreter: Lehle, Josef

(56) Entgegenhaltungen:
- DE-A1- 10 052 473
- DE-A1-0102004 012 40
- JP-A- 2004 308 675
- US-B1- 6 589 127

## Beschreibung

Die Erfindung betrifft eine Laschenkette für ein Kegelscheiben-Umschlingungsgetriebe, insbesondere für Kraftfahrzeuge.

Eine gattungsgemäße Laschenkette beschreibt die DE 10 2004 012 400 A1, bei der zur Verminderung des Verschleißes zumindest der außen liegenden Laschen gemäß Anspruch 3 vorgeschlagen wird, die inneren Wälzflächen der Wiegedruckstücke als Freiformflächen derart auszubilden, dass über die Breite der Laschenkette vorhandene Unterschiede in der Spannungsbeaufschlagung der Laschen kompensiert werden. Konkret sind die Wiegedruckstücke bezogen auf die Breite der Laschenkette im mittleren Bereich an den aneinander anliegenden Wälzflächen dicker als an den Endbereichen ausgeführt. Damit soll bei breiteren Laschenketten der durch die Durchbiegung der Wiegedruckstücke bei hohen Lasten auftretenden Überbelastung der äußeren Laschen entgegengewirkt werden. Dadurch liegt bei einer geringeren Beanspruchung der Laschenkette (z. B. Teillastbetrieb) nur eine Punktberührung jeweils zwischen den Wiegedruckstücken vor, die eine gewisse Unstabilität der Laschenkette und einen erhöhten Verschleiß verursachen kann.

Die JP 2004 308675 A zeigt eine Laschenkette für ein Kegelscheiben-Umschlingungsgetriebe, die aus paarweise angeordneten Wiegedruckstücken und diese paarweise angeordneten Wiegedruckstücke verbindende Vielzahl von Laschen besteht. Zwei paarweise angeordnete Wiegedruckstücke haben jeweils eine innere Wälzfläche, die gegenüberliegend zueinander angeordnet sind und jeweils eine äußere Wälzfläche, die mit den Laschen in Kontakt ist. Um Spitzenspannungen auf die an den Endseiten der Wiegedruckstücke angeordneten Laschen zu verhindern, werden die Wiegedruckstücke an beiden Enden mit einer Flexibilität versehen. Die Flexibilität wird dadurch erreicht, dass zumindest das einer Zugbelastung ausgesetzte Wiegedruckstück an den Endbereichen auf der Seite der inneren Wälzfläche mit einer gleichmäßigen, streifenförmigen Aussparung versehen ist. Dabei ist die äußere Wälzfläche des Wiegedruckstücks im spannungsfreien Zustand als eine Gerade ausgebildet. Bei Volllast verformen sich die Endseiten der ausgesparten Wiegedruckstücke elastisch wie eine Feder, um die Spitzenspannungen, die auf die äußeren Laschen wirken, zu verringern.

Aufgabe der Erfindung ist es, eine Laschenkette der gattungsgemäßen Art mit einfachen Mitteln derart weiterzubilden, dass bei einer weitgehendst gleichmäßigen Spannungsbelastung ein geringerer Verschleiß und eine größere Laufruhe der Laschenkette erzielt wird.

Diese Aufgabe wird mit den Merkmalen des Patentanspruches 1 gelöst. Vorteilhafte Weiterbildungen der Erfindung sind den weiteren Patentansprüchen entnehmbar.

Erfindungsgemäß wird vorgeschlagen, dass die äußeren Wälzflächen zumindest jeweils eines der Wiegedruckstücke - bevorzugt jedoch beider Wiegedruckstücke - derart ausgeführt sind, dass die in Querrichtung gesehen außen liegenden Laschen der Laschenkette bei niedriger Last entlastet und bei Volllast im elastischen Verformungsbereich der Wiegedruckstücke mit belastet sind.

Die Wiegedruckstücke liegen somit mit ihren inneren Wälzflächen wie konstruktiv vorgesehen ständig aneinander an und wirken gemeinsam einer Durchbiegung zunächst entgegen. Dies verbessert die Laufstabilität und das Verschleißverhalten der Laschenkette, wobei aufgrund der vorgeschlagenen Gestaltung der äußeren Wälzflächen der Wiegedruckstücke trotzdem die inneren Laschen höher belastet werden als die äußeren Laschen. Mit zunehmender Belastung der Laschenkette bis hin zur Volllast verlagert sich durch die elastische Durchbiegung der Wiegedruckstücke die Belastung der Laschen auch auf die äußeren Laschen, wobei eine zumindest im Wesentlichen gleichmäßige Spannungsbeaufschlagung erfolgt. Die Konfiguration der Wiegedruckstücke ist dabei derart, dass z. B. bei einem Vorrecken der Laschenkette mit einer definierten Volllast die Durchbiegung der Wiegedruckstücke im elastischen Bereich verbleibt, so dass die beschriebene Funktion im Betrieb der Laschenkette ständig erhalten bleibt.

Des Weiteren hat sich gezeigt, dass durch die vorgeschlagene Konfiguration der Wiegedruckstücke mit den entsprechend ausgeführten äußeren Wälzflächen durch Mikroschlupf zwischen den benachbarten Laschen ein verbessertes Dämpfungsverhalten der Laschenkette erzielbar ist.

Die Wiegedruckstücke liegen dabei bevorzugt an ihren inneren Wälzflächen über ihre Breite zumindest mit Linienberührung aneinander an, während die äußeren Wälzflächen den Stirnseiten der Wiegedruckstücke zu konisch sich verjüngend auslaufen. Daraus resultiert eine stabile, definierte Zuordnung der Wiegedruckstücke zueinander über den gesamten Lastbereich der Laschenkette.

Die Wiegedruckstückpaare können zur Erzielung einer definierten, über den Lastbereich der Laschenkette vorgegebenen Spannungsverteilung an den Laschen zumindest an ihren an die Stirnseiten anschließenden Endbereichen konisch ausgeführt sein, während über die Breite der Laschenkette gesehen ein mittlerer Abschnitt achsparallel ausgeführt ist. Dadurch ist ein inneres, mittleres Laschenpaket mit mehreren, nebeneinander angeordneten Laschen auch bei niedriger Belastung der Laschenkette ständig belastet.

Die Wiegedruckstückpaare können aber auch in vorteilhafter Weise über die gesamte Breite der Laschenkette gesehen von der Kettenmitte nach beiden Seiten konisch ausgebildet sein, so dass die Spannungsbeaufschlagung der Laschen mit zunehmender Last gleichmäßig auf alle Laschen übergeht.

Fertigungstechnisch günstig können die äußeren Wälzflächen der Wiegedruckstücke über die Breite der Laschenkette gesehen mit zumindest einem definierten Krümmungsradius r₂ derart ausgeführt sein, dass bei niedriger Last nur die mittleren Laschen und bei Volllast alle Laschen der Laschenkette beaufschlagt sind, wobei die aus der Volllast resultierende Verformung der Wiegedruckstücke im elastischen Bereich bleibt.

Dabei kann vorzugsweise der Krümmungsverlauf der äußeren Wälzflächen der Wiegedruckstücke auf die Belastung der Laschenkette derart abgestimmt sein, dass im Volllastbereich der Laschenkette in Zugrichtung und ggf. in Druckrichtung im wesentlichen eine gleichmäßige, spezifische Spannungsbeaufschlagung der Laschen der Laschenkette erzielt ist.

Bei einer im Querschnitt gesehen konvexen, ggf. rotationssymmetrischen Grundauslegung der äußeren Wälzflächen der Wiegedruckstücke können diese im konisch sich verringernden Bereich ballig ausgeführt sein, um den Spannungsverlauf in den Wiegedruckstücken belastungskonform auszulegen.

Schließlich können die äußeren Wälzflächen über ca. ein Drittel ihrer mittleren Längserstreckung gleichförmig bzw. achsparallel und beiderseits deren Stirnflächen zu konisch sich verjüngend ausgebildet sein. Dadurch können neben der fertigungstechnischen Vereinfachung der Wiegedruckstücke gezielte mittlere Laschenpakete in die untere Lastbeaufschlagung einbezogen werden, während die über die Breite der Laschenkette gesehen äußeren Laschen sukzessive der Leistungsübertragung der Laschenkette zugeschaltet werden.

Mehrere Ausführungsbeispiele der Erfindung sind im folgenden mit weiteren Einzelheiten näher erläutert. Die schematische Zeichnung zeigt in:
- **Fig. 1**: eine Draufsicht auf einen Abschnitt einer Laschenkette für ein Kegelscheiben-Umschlingungsgetriebe für Kraftfahrzeuge;
- **Fig. 2**: eine grob schematische, raumbildliche Darstellung eines einzelnen Wiegedruckstückpaares der Laschenkette nach Fig. 1 mit mittleren und äußeren Laschen;
- **Fig.**: **3** einen teilweisen Längsschnitt durch ein alternatives Wiegedruckstückpaar einer Laschenkette gemäß Fig.1, mit nur in den Endbereichen sich konisch verjüngenden Wiegestücken; und
- **Fig.**: **4**einen Querschnitt entlang der Linie IV ― IV der Fig. 3 durch eines der Wiegestücke der Laschenkette nach den Fig.1 und 3.

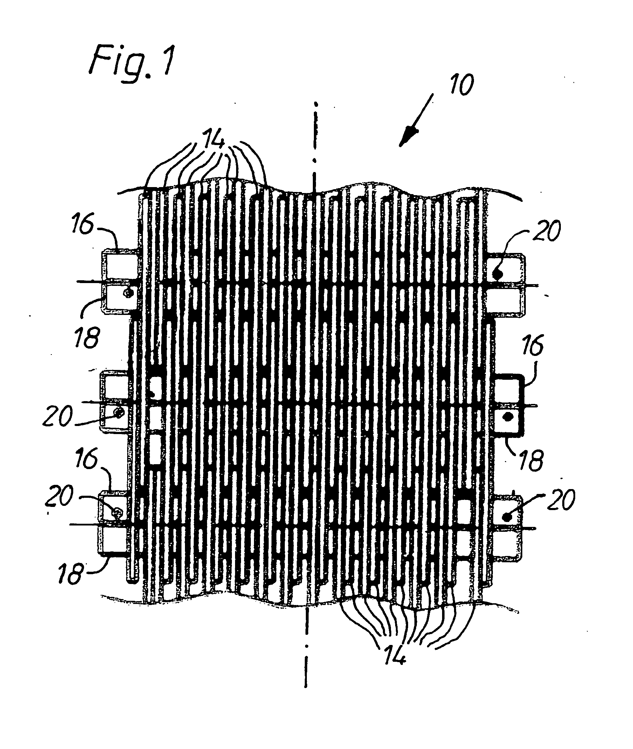

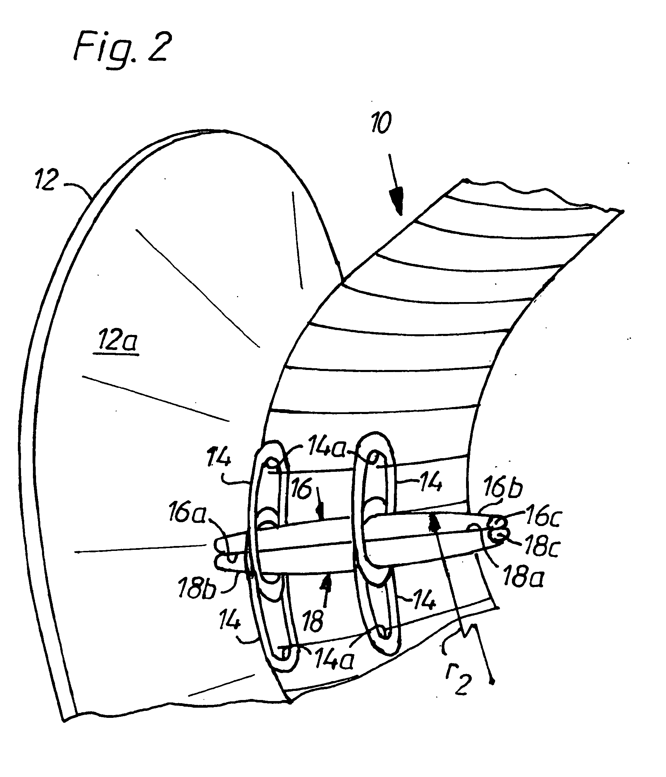

In den **Fig. 1** **und** **2** ist abschnittsweise eine Laschenkette 10 für ein Kegelscheiben-Umschlingungsgetriebe (CVT-Getriebe) für Kraftfahrzeuge dargestellt. Die Laschenkette 10 (vgl. **Fig. 2**) läuft in bekannter Weise zwischen axial verstellbaren Kegelscheiben 12 zweier auf Getriebewellen angeordneter Kegelscheibensätze an entsprechenden Kegelflächen 12a (es ist nur eine Scheibenhälfte dargestellt) um, wobei zur stufenlosen Übersetzungseinstellung die wirksamen Kettenumschlingungsradien an den Scheibensätzen in bekannter Weise verstellbar sind.

Die Laschenkette 10 setzt sich im wesentlichen zusammen aus einer Vielzahl von nebeneinander und hintereinander angeordneter Laschen (allgemein mit 14 bezeichnet), in deren Öffnungen 14a jeweils quer zur Laschenkette 10 ausgerichtete und zueinander in Kettenlängsrichtung beabstandete Wiegedruckstückpaare 16, 18 einragen. Durch den Versatz der Laschen 14 in Kettenlängsrichtung ist in bekannter Weise ein zusammenhängender Kettenverbund mit alternierend mit Wiegedruckstücken 16, 18 zusammenwirkender Laschen 14 geschaffen. Die Wiegedruckstückpaare 16, 18 bzw. die Laschen 14 sind durch nur angedeutete Schweißpins 20 **(****Fig. 1****)** in Axialrichtung gesichert.

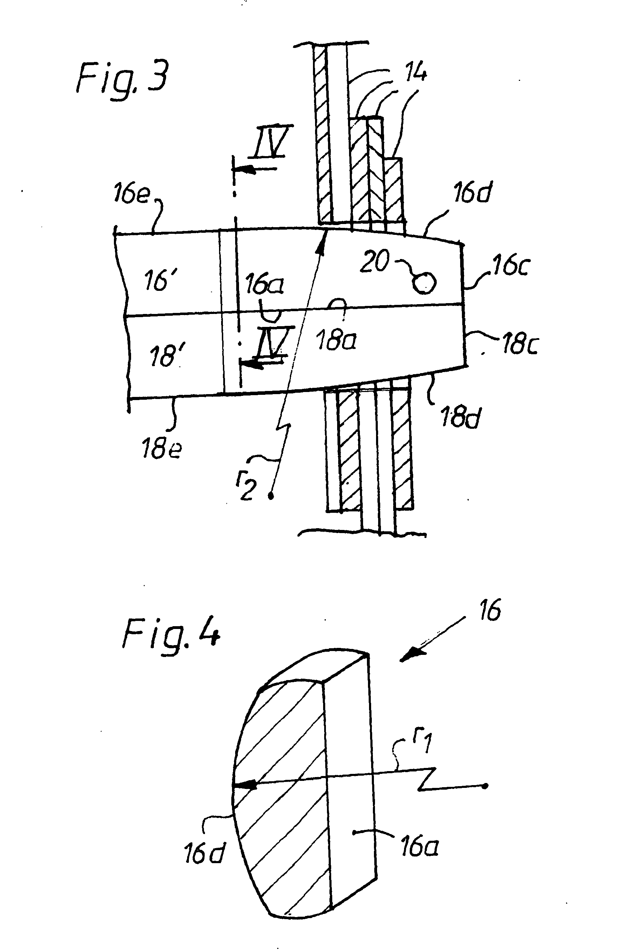

Die Wiegedruckstückpaare 16, 18 bzw. die Wiegedruckstücke 16, 18 liegen an inneren, einander zugewandten Wälzflächen 16a, 18a (vgl. auch **Fig. 3 und 4**) aneinander an, wobei diese Wälzflächen 16a, 18a achsparallel zueinander verlaufen, so dass abhängig von deren Geometrie (plan oder leicht konvex) eine über die Breite der Laschenkette 10 bzw. über die Länge der Wiegedruckstücke 16, 18 ausgebildete Linien- oder Flächenberührung vorliegt.

Davon abweichend sind die äußeren, mit den Öffnungen 14a in den Laschen 14 korrespondierenden Wälzflächen 16b, 18b im Querschnitt gesehen (**Fig. 4**) konvex mit einem definierten Radius r₁ und in der Draufsicht (**Fig. 2**) mit von der Mitte aus nach außen abnehmender Breite (also konisch) in einem Krümmungsradius r₂ ausgeführt, wobei sich insgesamt eine leicht ballige Konfiguration der Wälzflächen 16b, 18b ergibt. Es versteht sich, dass der Krümmungsradius r₂ zur Veranschaulichung der Erfindung übertrieben dargestellt ist.

Dementsprechend nimmt die Dicke der Wiegedruckstücke 16, 18 von deren Mitte aus nach außen zu den Stirnflächen 16c, 18c der Wiegedruckstückpaare 16, 18 ab, während die Laschen 14 mit deren Öffnungen 14a mit gleicher Geometrie bzw. wirksamer Laschenlänge gefertigt sind.

Daraus resultiert eine geringere Vorspannung bzw. Belastung der über die Breite der Laschenkette 10 gesehen äußeren Laschen 14, weil die gegenüber einer achsparallelen Gestaltung zurückgesetzten Bereiche der Wälzflächen 16b, 18b bei geringerer Kettenbelastung nicht oder nur ein geringes Moment auf die Laschen 14 übertragen. Die äußeren Wälzflächen 16b, 18b sämtlicher Wiegedruckstücke 16, 18 sind also derart ausgeführt, dass die in Querrichtung gesehen außen liegenden Laschen 14 der Laschenkette 10 bei niedriger Last entlastet und bei Volllast im elastischen Verformungsbereich der Wiegedruckstücke 16, 18 mit belastet sind.

Wird z.B. über die Stirnflächen 16c, 18c der Wiegedruckstückpaare 16, 18 ein hohes Antriebsmoment in die Laschenkette 10 eingeleitet, so verformen sich die Wiegedruckstücke 16, 18 in Zug- oder Schubrichtung im elastischen Bereich derart, dass auch die äußeren Laschen 14 bis zu einer gleichmäßigen Belastung aller Laschen 14 herangezogen werden. Die Wälzflächen 16b oder 18b der jeweils übertragenden Wiegedruckstücke 16 oder 18 nehmen dabei eine im wesentlichen achsparallele Form über deren Breite an. Bei einem abnehmenden Antriebsmoment "federn" die Wiegedruckstücke 16, 18 wieder in ihre geometrisch vorgegebene Ursprungsform zurück.

Anstelle einer durchgehend konischen Gestaltung der Wiegedruckstücke 16, 18 mit dem Krümmungsradius r₂ können auch nur die Endbereiche der Wiegedruckstücke 16', 18' über jeweils ca. ein Drittel ihrer Länge in deren Dicke abnehmen bzw. mit Wälzflächen 16d, 18d versehen sein, die einen Krümmungsabschnitt r₂ aufweisen **(****Fig. 3****),** während der mittlere Abschnitt 16e, 18e zwar im Querschnitt gesehen konvex, aber in Längsrichtung achsparallel, also mit gleichmäßiger Dicke, ausgeführt ist. Damit wird bei einer geringeren Belastung der Laschenkette 10 ein definiertes, mittleres Laschenpaket 14 belastet, während die äußeren Laschen 14 wie vorbeschrieben entlastet sind.

Anstelle des dargestellten Krümmungsradius r₂ kann auch eine Profilfläche mit mehreren, ineinander übergehenden Krümmungsradien oder anderen Formen vorgesehen sein.

## Patentansprüche

1. Laschenkette (10) für ein Kegelscheiben-Umschlingungsgetriebe, insbesondere für Kraftfahrzeuge, mit mehreren die Laschenkette (10) quer durchragenden, paarweise angeordneten Wiegedruckstücken (16, 18) und die Wiegedruckstücke (16, 18) in Kettenlängsrichtung verbindenden, zueinander versetzt liegenden Laschen (14), wobei die Wiegedruckstücke (16, 18) mit einander zugewandten, inneren Wälzflächen (16a, 18a) aneinander anliegen und mit äußeren Wälzflächen (16b, 18b; 16d, 18d) mit Öffnungen der Laschen (14) zusammenwirken und an ihren Stirnseiten (16c, 18c) Reibflächen aufweisen, die an den Kegelflächen (12a) der Kegelscheiben (12) zur Drehmomentübertragung anlaufen, und wobei ferner die Wiegedruckstücke (16, 18) derart ausgebildet sind, dass über die Breite der Laschenkette (10) vorhandene Unterschiede der über die Wiegedruckstückpaare (16, 18) auf die Laschen (14) übertragenen Momente zumindest teilweise kompensiert werden, **dadurch gekennzeichnet, dass** die äußeren Wälzflächen (16b, 18b; 16d, 18d) zumindest jeweils eines der Wiegedruckstücke (16, 18) in Richtung der Stirnseiten (16c, 18c) der Wiegedruckstücke (16, 18) konisch sich verjüngend ausgeführt sind, so dass die in Querrichtung gesehen außen liegenden Laschen (14) der Laschenkette (10) bei niedriger Last entlastet und bei Volllast im elastischen Verformungsbereich der Wiegedruckstücke (16, 18) mit belastet sind.

2. Laschenkette nach Anspruch 1, **dadurch gekennzeichnet, dass** zur Entlastung der außen liegenden Laschen (14) bei Zug- und Schubbelastung jeweils beide äußeren Wälzflächen (16b, 18b; 16d, 18d) der Wiegedruckstücke (16, 18) den Stirnseiten (16c, 18c) der Wiegedruckstücke (16, 18) zu konisch sich verjüngend auslaufen.

3. Laschenkette nach den Ansprüchen 1 oder 2, **dadurch gekennzeichnet, dass** die Wiegedruckstücke (16, 18) an ihren inneren Wälzflächen (16a, 18a) über ihre Breite zumindest mit Linienberührung aneinander anliegen und nur die äußeren Wälzflächen (16b, 18b; 16d, 18d) den Stirnseiten (16c, 18c) der Wiegedruckstücke (16, 18) zu konisch sich verjüngend auslaufen.

4. Laschenkette nach einem oder mehreren der vorhergehenden Ansprüche, **dadurch gekennzeichnet, dass** die Wiegedruckstückpaare (16', 18') zumindest an ihren an die Stirnseiten (16c, 18c) anschließenden Endbereichen (16d, 18d) konisch ausgeführt sind.

5. Laschenkette nach einem oder mehreren der vorhergehenden Ansprüche, **dadurch gekennzeichnet, dass** die Wiegedruckstückpaare (16, 18) mit ihren Wälzflächen (16b, 18b) über die gesamte Breite der Laschenkette (10) gesehen von der Kettenmitte nach beiden Seiten konisch ausgebildet sind.

6. Laschenkette nach einem oder mehreren der vorhergehenden Ansprüche, **dadurch gekennzeichnet, dass** die äußeren Wälzflächen (16b, 18b) der Wiegedruckstücke (16, 18) über die Breite der Laschenkette (10) gesehen mit zumindest einem definierten Krümmungsradius (r₂) derart ausgeführt sind, dass bei niedriger Last nur die mittleren Laschen (14) und bei Volllast alle Laschen (14) der Laschenkette (10) beaufschlagt sind, wobei die aus der Volllast resultierende Verformung der Wiegedruckstücke (16, 18) im elastischen Bereich bleibt.

7. Laschenkette nach einem oder mehreren der vorhergehenden Ansprüche, **dadurch gekennzeichnet, dass** der Krümmungsverlauf (r₂) der äußeren Wälzflächen (16b, 18b) der Wiegedruckstücke (16, 18) auf die Belastung der Laschenkette (10) derart abgestimmt ist, dass im Volllastbereich der Laschenkette (10) in Zugrichtung und ggf. in Druckrichtung im wesentlichen eine gleichmäßige, spezifische Spannungsbeaufschlagung der Laschen (14) der Laschenkette (10) erzielt ist.

8. Laschenkette nach einem oder mehreren der vorhergehenden Ansprüche, **dadurch gekennzeichnet, dass** die äußeren Wälzflächen (16b, 18b; 16d, 18d) der Wiegedruckstücke (16, 18) bei im Querschnitt gesehen konvexer Grundauslegung ballig ausgeführt sind.

9. Laschenkette nach einem oder mehreren der vorhergehenden Ansprüche, **dadurch gekennzeichnet, dass** die äußeren Wälzflächen (16d, 18d) der Wiegedruckstücke (16', 18') über ca. ein Drittel ihrer mittleren Längserstreckung (16e, 18e) achsparallel und beiderseits dazu konisch sich verjüngend ausgebildet sind.

## Claims

1. Plate-link chain (10) for a conical pulley transmission, in particular for motor vehicles, comprising a plurality of rocker pressure members (16, 18) extending transversely through the plate-link chain (10) and arranged in pairs, and plates (14) lying offset to one another and connecting the rocker pressure members (16, 18) in the longitudinal direction of the chain, wherein the rocker pressure members (16, 18) lie against one another with inner rolling surfaces (16a, 18a) which face toward one another and, with outer rolling surfaces (16b, 18b; 16d, 18d), cooperate with openings of the plates (14) and have contact surfaces on their front sides (16c, 18c), said contact surfaces running against the conical surfaces (12a) of the conical pulleys (12) for torque transmission and wherein the rocker pressure members (16, 18) are also configured such that differences existing across the width of the plate-link chain (10) in the moments transmitted via the rocker pressure member pairs (16, 18) to the plates (14) are at least partially compensated for, **characterised in that** the outer rolling surfaces (16b, 18b; 16d, 18d) of at least one of the rocker pressure members (16, 18) are configured conically narrowing in the direction of the front sides (16c, 18c) of the rocker pressure members (16, 18), such that the plates (14) of the plate-link chain (10) lying outwardly, seen in the transverse direction, are unloaded under low load and, under full load, are also loaded in the elastic deformation region of the rocker pressure members (16, 18).

2. Plate-link chain according to claim 1, **characterised in that**, for load alleviation of the outwardly lying plates (14) in the case of pull and push loading, in each case, both outer rolling surfaces (16b, 18b; 16d, 18d) of the rocker pressure members (16, 18) taper off, narrowing conically towards the front sides (16c, 18c) of the rocker pressure members (16, 18).

3. Plate-link chain according to claims 1 or 2, **characterised in that** the rocker pressure members (16, 18) lie against one another on their inner rolling surfaces (16a, 18a) over their width at least with linear contact and only the outer rolling surfaces (16b, 18b; 16d, 18d) taper off, narrowing conically towards the front sides (16c, 18c) of the rocker pressure members (16, 18).

4. Plate-link chain according to one or more of the preceding claims, **characterised in that** the rocker pressure member pairs (16', 18') are configured with at least their end regions (16d, 18d) adjacent to the front sides (16c, 18c) conical.

5. Plate-link chain according to one or more of the preceding claims, **characterised in that** the rocker pressure member pairs (16, 18) are configured with their rolling surfaces (16b, 18b) seen over the whole width of the plate-link chain (10) conical from the chain centre towards both sides.

6. Plate-link chain according to one or more of the preceding claims, **characterised in that** the outer rolling surfaces (16b, 18b) of the rocker pressure members (16, 18) seen over the width of the plate-link chain (10) are configured with at least one defined radius of curvature (r 2) such that under low load, only the centre plates (14) and under full load, all the plates (14) of the plate-link chain (10) are loaded, wherein the deformation of the rocker pressure members (16, 18) resulting from the full load remains in the elastic region.

7. Plate-link chain according to one or more of the preceding claims, **characterised in that** the radius of curvature (r₂) of the outer rolling surfaces (16b, 18b) of the rocker pressure members (16, 18) is adjusted to the loading of the plate-link chain (10) such that in the full load region of the plate-link chain (10) an essentially even specific tension loading of the plates (14) of the plate-link chain (10) is achieved in the pulling direction and, possibly, in the pushing direction.

8. Plate-link chain according to one or more of the preceding claims, **characterised in that** the outer rolling surfaces (16b, 18b; 16d, 18d) of the rocker pressure members (16, 18), given a convex basic design seen in cross-section, are configured ball-shaped.

9. Plate-link chain according to one or more of the preceding claims, **characterised in that** the outer rolling surfaces (16d, 18d) of the rocker pressure members (16', 18') are configured over approximately one third of their central longitudinal extent (16e, 18e) axially parallel and, on either side thereof, narrowing conically.

## Revendications

1. Chaîne articulée (10) pour une transmission à enroulement à poulies coniques, en particulier pour véhicules automobiles, avec plusieurs éléments de pression de pesée (16, 18) disposés par paires, traversant transversalement la chaîne articulée (10) et des languettes (14) décalées les unes par rapport aux autres, reliant les éléments de pression de pesée (16, 18) dans le sens longitudinal de la chaîne, les éléments de pression de pesée (16, 18) reposant les uns sur les autres avec des surfaces de roulement (16a, 18a) intérieures, tournées l'une vers l'autre et avec des surfaces de roulement (16b, 18b ; 16d, 18d) extérieures coopérant avec des ouvertures des languettes (14) et sur leurs côtés frontaux (16c, 18c) présentant des surfaces de friction qui démarrent sur les surfaces coniques (12a) des poulies coniques (12) pour la transmission de couple, et les éléments de pression de pesée (16, 18) étant réalisés de plus de sorte que des différences présentes sur la largeur de la chaîne articulée (10) des couples transmis par les paires d'éléments de pression de pesée (16, 18) sur les languettes (14) soient compensées au moins en partie,
**caractérisée en ce que** les surfaces de roulement (16b, 18b ; 16d, 18d) extérieures d'au moins respectivement l'un des éléments de pression de pesée (16, 18) sont réalisées se rétrécissant coniquement en direction des côtés frontaux (16c, 18c) des éléments de pression de pesée (16, 18) de sorte que les languettes (14) se trouvant à l'extérieur vu dans le sens transversal de la chaîne articulée (10) soient déchargées en cas de charge faible et en cas de pleine charge soient chargées dans la zone de déformation élastique des éléments de pression de pesée (16, 18).

2. Chaîne articulée selon la revendication 1, **caractérisée en ce que**, pour la décharge des languettes (14) extérieures en cas de charge de traction et de poussée, respectivement les deux surfaces de roulement (16b, 18b ; 16d, 18d) extérieures des éléments de pression de pesée (16, 18) se terminent se rétrécissant coniquement vers les côtés frontaux (16c, 18c) des éléments de pression de pesée (16, 18).

3. Chaîne articulée selon les revendications 1 ou 2, **caractérisée en ce que** les éléments de pression de pesée (16, 18) reposent l'un sur l'autre sur leurs surfaces de roulement (16a, 18a) intérieures sur leur largeur au moins avec contact linéaire et seules les surfaces de roulement (16b, 18b ; 16d, 18d) extérieures se terminent se rétrécissant coniquement vers les côtés frontaux (16c, 18c) des éléments de pression de pesée (16, 18).

4. Chaîne articulée selon l'une ou plusieurs quelconques des revendications précédentes, **caractérisée en ce que** les paires d'éléments de pression de pesée (16', 18') sont réalisées coniquement au moins sur leurs zones d'extrémité (16d, 18d) jouxtant les côtés frontaux (16c, 18c).

5. Chaîne articulée selon l'une ou plusieurs quelconques des revendications précédentes, **caractérisée en ce que** les paires d'éléments de pression de pesée (16', 18') avec leurs surfaces de roulement (16b, 18b) sont réalisées coniquement du milieu de la chaîne vers les deux côtés vu sur toute la largeur de la chaîne articulée (10).

6. Chaîne articulée selon l'une ou plusieurs quelconques des revendications précédentes, **caractérisée en ce que** les surfaces de roulement (16b, 18b) extérieures des éléments de pression de pesée (16, 18) sont réalisées vu sur la largeur de la chaîne articulée (10) avec au moins un rayon de courbure (r₂) défini de telle sorte qu'en cas de charge faible, seules les languettes médianes (14) et en cas de charge pleine, toutes les languettes (14) de la chaîne articulée (10) soient sollicitées, la déformation résultant de la pleine charge des éléments de pression de pesée (16, 18) restant dans la zone élastique.

7. Chaîne articulée selon l'une ou plusieurs quelconques des revendications précédentes, **caractérisée en ce que** le développement de courbure (r₂) des surfaces de roulement (16b, 18b) extérieures des éléments de pression de pesée (16, 18) est adapté à la charge de la chaîne articulée (10) de telle sorte que dans la plage de pleine charge de la chaîne articulée (10) dans le sens de traction et éventuellement dans le sens de poussée, essentiellement une sollicitation en tension spécifique, uniforme des languettes (14) de la chaîne articulée (10) soit obtenue.

8. Chaîne articulée selon l'une ou plusieurs quelconques des revendications précédentes, **caractérisée en ce que** les surfaces de roulement (16b, 18b ; 16d, 18d) extérieures des éléments de pression de pesée (16, 18) sont réalisées de manière bombée lorsque la conception de base est convexe, vue en section transversale.

9. Chaîne articulée selon l'une ou plusieurs quelconques des revendications précédentes, **caractérisée en ce que** les surfaces de roulement (16d, 18d) extérieures des éléments de pression de pesée (16', 18') sont réalisées parallèles à l'axe sur environ un tiers de leur développement longitudinal (16e, 18e) médian et se rétrécissant des deux côtés coniquement.
